# EUROPEAN PATENT SPECIFICATION

(11) **EP 1 795 443 B1**
(45) Date of publication and mention of the grant of the patent: **13.08.2008**
(21) Application number: 05026888.7
(22) Date of filing: 08.12.2005
(51) Int. Cl.: B63B 35/40

(54) **Vessel for transport and handling means offshore, method and uses hereof**
Schiff für den Transport sowie zur Offshore-Bedienung von Mitteln, Methode und Anwendung hierfür
Navire pour le transport et la manipulation offshore d'éléments, méthode et utilisations d'un tel navire

(43) Date of publication of application: 13.06.2007
(73) Proprietor: CMC-Chartering & MarineConsultants A/S, 8000 Arhus C (DK)
(72) Inventor: Leif, Berg, 8240 Risskov (DK)
(74) Representative: Olesen, Kaj

(56) References cited:
- EP-A- 0 094 434
- WO-A-00/27692
- US-A- 4 456 404
- US-B1- 6 808 337

## Description

### Background of the invention

The present invention relates to a vessel for transport and handling means offshore according to the preamble of claim 1, a method and uses hereof

### Description of the Related Art

Working offshore with a vessel at a given position is often handled by using anchors which fixate the vessel to the seabed. However the use of anchors does not create a stabile and defined work place under all weather conditions.

Vessels with incorporated elevation legs for stabilizing an offshore work place are well known e.g. from oil drilling jackup rigs. The legs of the rig are vertically lowered down into the seabed at the position of the oil extraction and hereby creating a stabilized work place for the rig. The vessels are always specialized for the particular area of use.

However, a cargo vessel with a similar functionality as the oil drilling rigs is known from US patent No. 6,808,337. The patent describes the vessel as equipped with vertically elevation legs at its two hull sides and a crane. The legs are mounted in at least two consoles which are connected to the right and left side of the vessel hull. When the legs are anchored into the seabed, the vessel are stabilized and hereby the crane mounted on the deck can extend from the cargo outward from the deck without giving rise to instability during handling of the cargo. However, the cargo vessel has an increased width and consequently deteriorated transport capabilities.

The object of the present invention is to establish a versatile vessel with elevation legs and especially without the above mentioned disadvantages.

### The invention

The present invention relates to a vessel wherein a docking station is connected to a ship with connection means and covering at least a section of the ship hull including the keel or bottom of said section.

This is advantageous in that it provides a versatile vessel with elevation legs. The elevation legs may be used in providing a stable work platform with or without the ship as the connection between the ship and docking station may be disconnected when preferred.

Further, it is advantageous that the ship as a work platform primarily is stabilized at the keel or bottom and not at the sides. Hereby, the ship structure is utilized in a more natural and efficient manner e.g. requiring less structural strength in establishing the stabilized work platform.

In an aspect of the invention, said docking station comprises an inner shape substantially corresponding to the shape of said covered hull section. Hereby, it is possible to create a slim docking station that in shape follows the ship hull and consequently creates less hydrodynamic resistance in the sailing direction.

In an aspect of the invention, said docking station and said section of covered hull establish a thin water filled space with smooth crossing areas creating a low hydrodynamic resistance in the sailing direction.

In an aspect of the invention, said connection means are hydraulic actuators, bolt and/or hardwood wedges establishing connections between the ship and docking station above the water line. Hereby, it is possible to design a smooth and easy way of connection/disconnection between the vessel and docking station and especially with a low need for shipyard and workshop maintenance.

In an aspect of the invention, a number of separation means such as hard wood planks separates said ship from the docking station at the keel/bottom and/or the sides. Hereby, it is ensured that the ship is connected and fixed to the docking station i.e. that the ship does not move independently of the docking station. Further, it is ensured that the steel ship and steel docking station are not damaged by scraping against each other.

In an aspect of the invention, said docking station comprises a number of connected stabilizing water tanks in the sides and the bottom. Hereby it is possible to stabilize and even the force that each elevation leg faces when they are anchored to the seabed. Further, the tanks may generally be used in changing the position of the docking station and/or the vessel.

In an aspect of the invention, said ship is a standard cargo ship such as a multipurpose ship with one or more ship cranes e.g. a heavy lift ship or a ro/ro ship with one or more mobile cranes on the open deck areas. The use of a standard cargo ship is preferable as the ship may be used for cargo transport purposes when it is not required in transporting or establishing an offshore work platform with the docking station.

In an aspect of the invention, at least said ship includes lift means such as one or more ship cranes or mobile cranes. Especially, it is advantageous that a mobile crane may drive into the ro/ro ship by its own driving force as well as change position on open deck when needed.

The invention further relates to a method for establishing a temporary offshore work platform at a desired position, said method comprising the steps of positioning a vessel for transport and handling means offshore at the position, said vessel including a ship and at least one docking station with one or more elevation legs and connection means connecting the ship and the docking station,
entering said one or more elevation legs into the seabed and elevating the vessel, and
establishing at least one connection between a section of the keel or bottom of the ship and said docking station by said elevation of the vessel.

Hereby is established an advantageous method to be used in creating a stabile offshore work platform.

The invention even further relates to uses of said vessel and method. Uses such as a temporary docking station for other ships and as a temporary offshore work platform at sea or in a harbor. A work platform which may handle means e.g. offloading, erecting and/or servicing offshore installations such as oilrigs and wind turbines or the like.

The term "temporary" in relation to a work platform should be understood as the hours or few days where the stabilized work platform is established by anchoring to the seabed, used and released again e.g. in connection with an offshore installation.

### Figures

The invention will be described in the following with reference to the figures in which
- fig 1: illustrates a side view in the longitudinal direction of a preferred embodiment of the outfitted vessel according to the invention,
- fig. 2: illustrates a cross sectional view in the transverse direction of the outfitted vessel,
- fig. 3: illustrates a top view of the docking station,
- fig. 4: illustrates a top view of the outfitted vessel, and
- figs. 5a and 5b: illustrate a cross section view in the transverse direction of the outfitted vessel at sea with the legs at a contracted position and with the legs anchored into the seabed.

### Detailed description

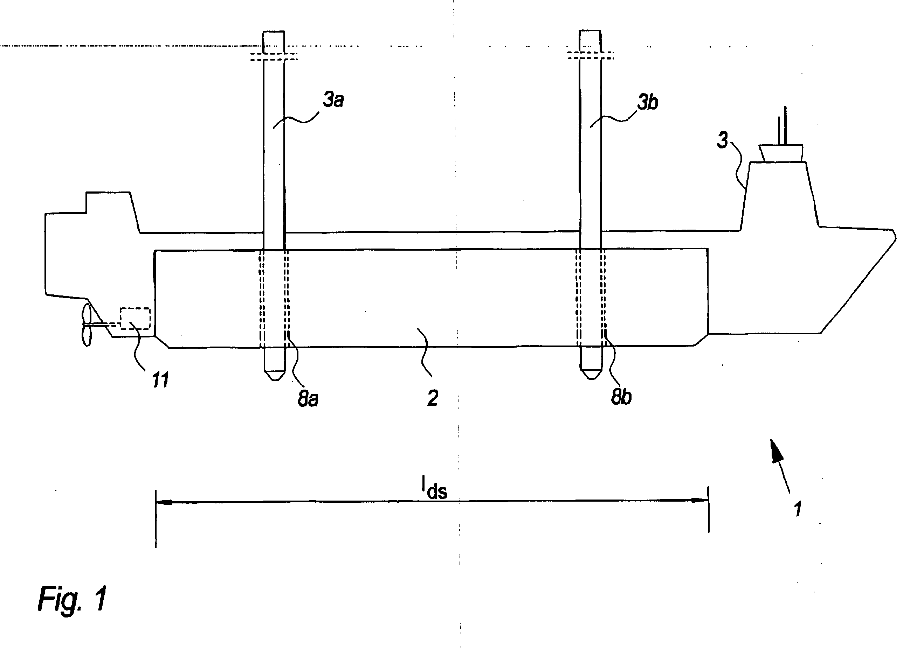

Fig 1 illustrates a side view in the longitudinal direction of the outfitted vessel 1 according to the invention. The vessel 1 integrates a ship 3 into a docking station 2 with a number of elevation legs 3a, 3b.

The ship 3 comprises means of propulsion 11 such as a drive shaft, a propeller and an engine. The means of propulsion 11 may propel the alone ship through the water as well as the vessel 1 when the ship is integrated into the docking station 2.

The ship may be a standard cargo ship such as a multipurpose ship with one or more ship cranes or a ro/ro ship with one or more mobile cranes on the open deck areas.

However, the ship may also be build solely to use in connection with a docking station e.g. with hulls, connection means and means of propulsion designed specifically for the integrated sailing of the vessel.

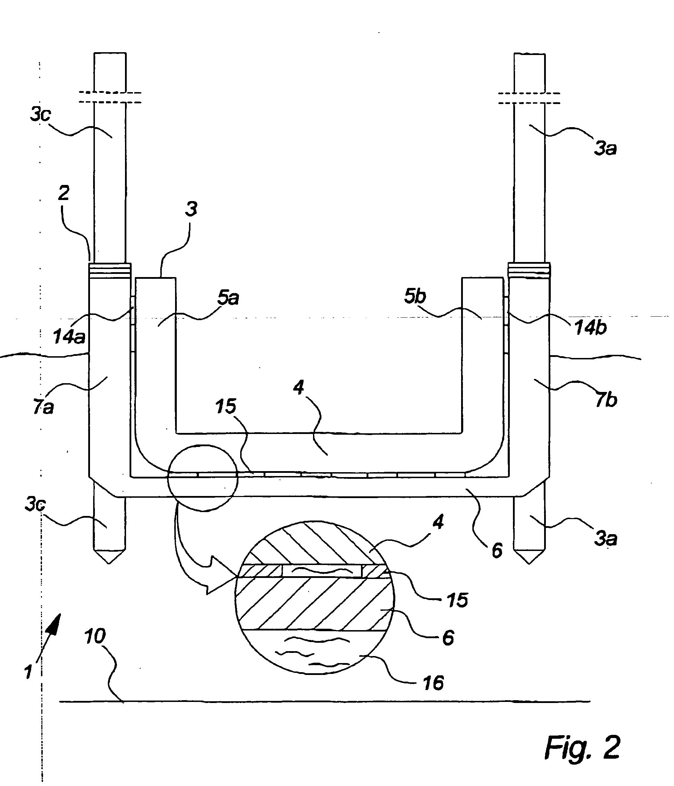

The docking station 2 comprises a number of elevation legs 3a, 3b (e.g. four legs establishing a four-sided configuration with one leg in each corner as illustrated in fig. 2). The legs may slide vertically in sleeves or channels 8a, 8b in the side structure of the docking station when lowered or raised e.g. with a hydraulic system.

The elevation legs 3a, 3b may be of any length which is sufficient to reach and anchor into the seabed at a desired offshore position where the vessel is to be used as a work platform.

The length of the legs is such that a stabilized work platform may be established with at least 45 to 50 meters above the seabed. However a standard length of the legs may be anything above 10 meters such as between 30 and 100 meters depending on the water depth and the type of seabed. Usually the legs enter between 1 and 5 meters into the seabed in order to anchor the docking station in a stabilized manner at sea surface.

Further, the legs may be divided into sections that are fitted together as they are deployed into the water or even be of a telescopic nature.

At the work position the elevation legs are vertically lower until the seabed is reached and the legs are anchored into the seabed. The docking station is hereby fully stabilized in the water and the keel or bottom of the ship is supported by the foundation of the docking station. Further, the ship may lean on the sides of the docking station and the vessel may be used as a stabilized offshore work platform.

The docking station preferably covers a section of the ship hull from one side, underneath the keel or bottom to the other side (as further illustrated in fig. 2). The length l_{ds} is the length of the covered section in the direction of sailing and at least corresponds to the necessary support which is needed by the ship structure when lifted in the water by the docking station.

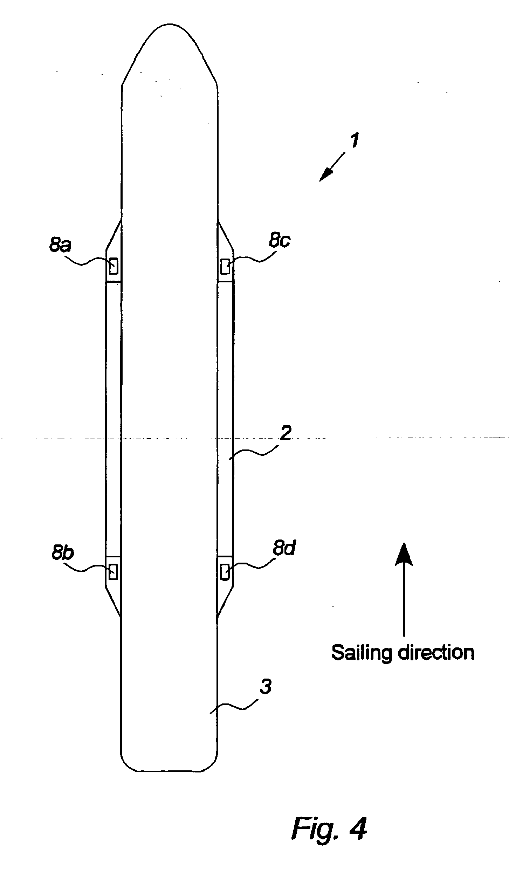

The shape of the docking station corresponds to the shape of the covered section and is preferably tapering toward the transitional areas between the docking station and the ship hull. Further, the distance between the ship hull and the inner side of the docking station is quite small (as illustrated on figs. 2 and 4) in order to establish a vessel with a low hydrodynamic resistance in the sailing direction.

During the voyage to the work place the legs may for example be stacked on the ship deck and lifted into their use position by the crane or just be mounted in the sleeves or channels at all times.

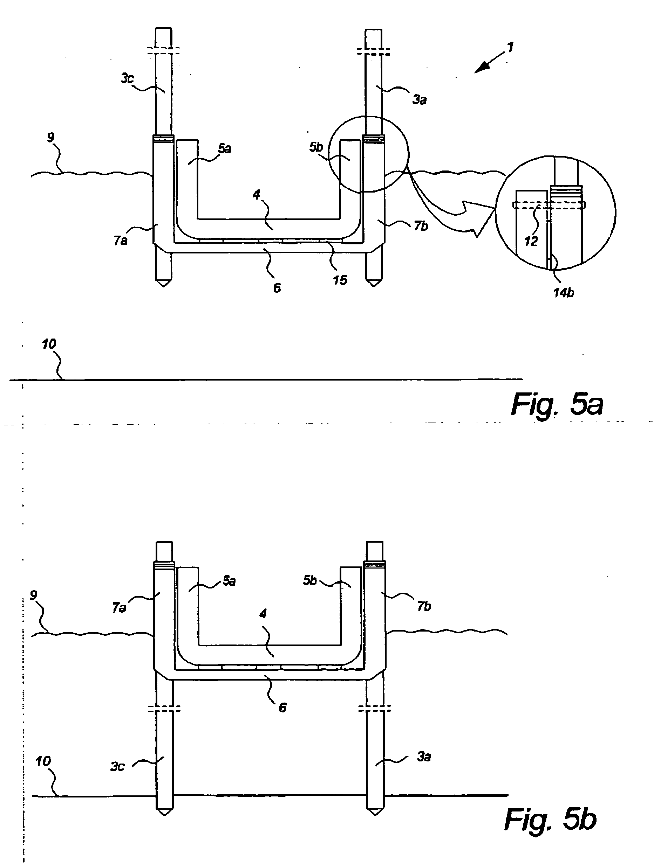

The vessel may be converted from a mode with the ship and docking station connected to each other to separate units. The docking station is preferably anchored to the seabed in this separated mode for the vessel. The connection means connecting the ship and the docking station may be mechanical or hydraulic actuated connectors e.g. establishing a number of connections between the sides above the waterline (as illustrated on fig. 5a).

The vessel and docking station is designed for a smooth and easy conversion between the two modes with a low use of shipyard and workshop services.

The vessel may be used in a number of different offshore applications such as transporting and handling components to an oil rig or a wind turbine site, stabilizing the vessel by anchoring the legs in the seabed and finally lifting and mounting the components with the vessel crane. The components may for example a full structure such as one or more wind turbines i.e. foundations, towers, nacelles and blades or components for an existing structure such as spare parts in connection with maintenance or service of the structure.

Further, the vessel may be used as a way to transport the docking station to a repair site where the ship is disconnected and the docking station is anchored to the seabed ready for connection to another ship e.g. a ship with need of repair under the waterline.

Fig. 2 illustrates a cross sectional view in the transverse direction of the outfitted vessel.

The figure illustrates the integration of the ship 3 in the docking station 2. The docking station substantially follows the shape of the ship hull and thus only establishing a thin water filled space between the two at the sides and the bottom.

The space between the ship and docking station is especially established by separation means 15 such as hard wood planks. The planks separate the ship 3 from the docking station 2 at the keel/bottom 4, 6 in the full length of the docking station. Further, the separation means 14a, 14b at the sides are used as wedges in order to fix the ship 3 to the docking station 2 as well as separating the two from each other. The separation means 14a, 14b may be planks as at the bottom or hydraulic actuated wedges or similar changeable wedges.

The figure also illustrates the docking station as equipped with four legs used for jack-up of the outfitted vessel as an offshore work platform. However, the docking station may also be equipped with more or less than four legs e.g. with six or eight legs e.g. in connection with heavy duty work or a very high degree of stabilizing the work platform.

The docking station is provided with a number of connected stabilizing water tanks in the sides and the bottom (not illustrated on the figures) of the station. The tanks may be filled or emptied in order to change the position of the docking station in the water e.g. lower, raising or tip the station.

The ship 3 may enter the docking station 2 after the stabilizing water tanks are filled with water. Hereafter the docking station is lifted by empting water from the tanks until the ship keel rests on the separation means. Finally, the vessel 1 is established by fixing the ship 3 to the docking station 2 and especially by using the separation means 14a, 14b at the sides as wedges.

Water may also be shifted or pumped between the connected water tanks when the docking station is anchored to the seabed e.g. from a tank next to one leg on one side over to a tank next to another leg on the other side in order to control and especially even the forces on each leg e.g. during heavy sea and crane movements.

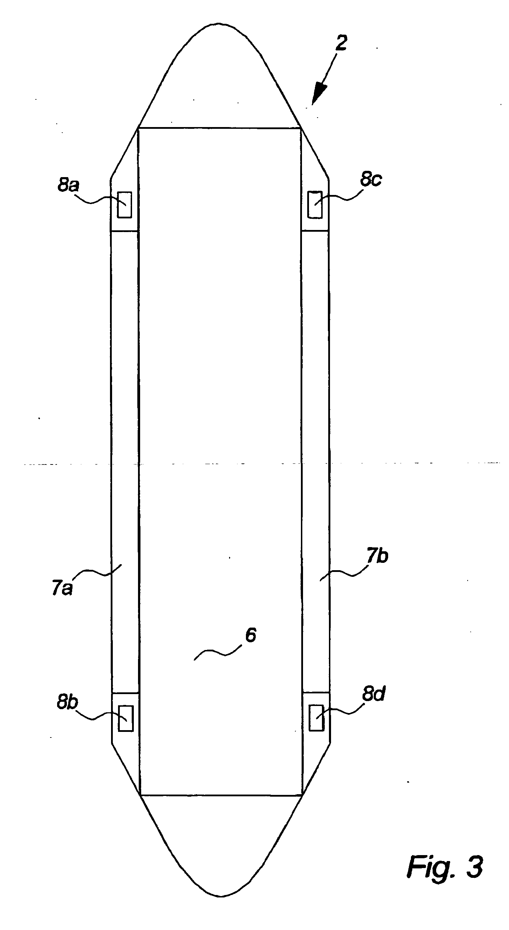

Fig. 3 illustrates a top view of the docking station 2.

The docking station 2 has port and starboard sides 7a, 7b and a bottom section 6. The sides include four sleeves or channels 8a-8d for holding and guiding the elevation legs 3a-3d wherein the sleeves are illustrated as positioned in each end of the sides. The sides may also comprise the necessary hydraulic means for elevating and controlling the legs (not illustrated on the figure).

Fig. 4 illustrates a top view of the outfitted vessel 1 including the docking station 2 and the ship 3.

The figure especially illustrates the docking station 2 tapering toward the transitional areas between the docking station and the ship hull.

Figs. 5a and 5b illustrate a cross section view in the transverse direction of the outfitted vessel at sea with the legs at a contracted position and with the legs anchored into the seabed.

Fig. 5a illustrates the vessel 1 in a configuration mode just before anchoring the docking station 2 to the seabed 10 and thus establishing an offshore work platform.

The legs will be retracted from the water during normal transport of the vessel 1 e.g. elevated in the sleeves to a position wherein the ends of the legs no longer extend into the water.

Further, the figure schematically illustrates the connection means 12 between the ship 3 and the docking station 2 as a bolt, pin, wedge, hydraulic actuators or similar locking means. The connection means especially connect the ship sides or deck with the docking station at the positions of the elevation legs and in positions as high above the waterline 9 as possible. Hereby, any sideway movement and moment of the legs during transport are transferred to the ship.

Fig. 5b illustrates the vessel 1 in the work platform configuration wherein the legs are anchored into the seabed 10. The anchoring is such that the bottom 6 of the docking station supports the ship keel or bottom 4 i.e. stabilizing the ship as the work platform.

### List

- 1.: Vessel
- 2.: Docking station
- 3.: Ship
- 3a, 3b, 3c, 3d.: Elevation legs of the docking station
- 4.: Keel or bottom of the ship
- 5a, 5b.: Port and starboard sides of the vessel
- 6.: Bottom of the docking station
- 7a, 7b.: Port and starboard sides of the docking station
- 8a, 8b, 8c, 8d.: Sleeves or channels in the docking station for the elevation legs
- 9.: Sea surface or waterline
- 10.: Seabed
- 11.: Means of propulsion for the ship such as drive shaft, propeller and engine
- 12.: Connection means between the ship and the docking station such as bolts or hydraulic actuators
- 14a, 14b.: Separation and connection means such as hard wood planks or wedges at the sides
- 15.: Separation and connection means such as hard wood planks at the bottom of the docking station
- 16.: Seawater
- l_{ds}.: Length of the covered hull section by the docking station

## Claims

1. Vessel (1) for transport and handling means offshore, said vessel comprising
a ship (3) with means of propulsion (11), and
at least one docking station (2) including one or more elevation legs such as four legs (3a-3d),
**characterized in that**
said docking station (2) is connected to the ship (3) with connection means (12, 14a, 14b, 15) and, in use, covers at least a section of the ship hull including the keel or bottom (4) of said section.

2. Vessel (1) according to claim 1, **characterized in that** at least said ship includes lift means such as one or more ship cranes or mobile cranes.

3. Vessel (1) according to claim 1 or 2, **characterized in that** said docking station (2) comprises an inner shape substantially corresponding to the shape of said covered hull section.

4. Vessel (1) according to any of claims 1 to 3, **characterized in that** said docking station (2) and said section of covered hull establish a thin water filled space with smooth crossing areas creating a low hydrodynamic resistance in the sailing direction.

5. Vessel (1) according to any of claims 1 to 4, **characterized in that** said connection means (12) are hydraulic actuators, bolt and/or hardwood wedges establishing connections between the ship (3) and docking station (2) above the water line.

6. Vessel (1) according to any of claims 1 to 5, **characterized in that** a number of separation means (14a, 14b, 15) such as hard wood planks separates said ship (3) from the docking station (2) at the keel/bottom (4/6) and/or the sides (5a, 5b; 7a, 7b).

7. Vessel (1) according to any of claims 1 to 6, **characterized in that** said docking station (2) comprises a number of connected stabilizing water tanks in the sides and the bottom.

8. Vessel (1) according to any of claims 1 to 7, **characterized in that** said ship (3) is a standard cargo ship such as a multipurpose ship with one or more ship cranes e.g. a heavy lift ship or a ro/ro ship with one or more mobile cranes on the open deck areas.

9. Method for establishing a temporary offshore work platform at a desired position, said method comprising the steps of
positioning a vessel (1) for transport and handling means offshore at the position, said vessel including a ship and at least one docking station with one or more elevation legs and connection means connecting the ship and the docking station,
entering said one or more elevation legs (3a-3d) into the seabed (10) and elevating the vessel, and
establishing at least one connection between a section of the keel or bottom (4) of the ship (3) and said docking station (2) by said elevation of the vessel.

10. Method according to claim 9 where water is entered into and/or emptied out of stabilizing water tanks in controlling the level of the docking station and/or especially the force on the elevation legs when they are anchored into the seabed.

11. Use of a vessel (1) according to any of claims 1 to 8 as a temporary docking station when said one or more elevation legs (3a-3d) of the docking station (2) are anchored into the seabed.

12. Use according to claim 9 or 10 where the ship (3) is disconnected and moved from the docking station (2) before or after the elevation legs (3a-3d) are anchored into the seabed.

13. Use of a vessel (1) according to any of claims 1 to 8 as a temporary work platform for erecting and/or servicing offshore installations such as oilrigs and wind turbines when said one or more elevation legs (3a-3d) of the docking station (2) are anchored into the seabed (9).

14. Use of a method according to claim 9 or 10 in establishing a temporary work platform for erecting and/or servicing offshore installations such as oilrigs and wind turbines when said one or more elevation legs of the docking station are anchored into the seabed.

## Patentansprüche

1. Seefahrzeug (1) für Transport und Offshore-Handhabung von Mitteln, wobei das Seefahrzeug folgendes umfasst:
ein Schiff (3) mit Antriebsmitteln (11), und
mindestens eine Dockstation (2), die ein oder mehrere zum Anheben dienende Beine enthält, so wie vier Beine (3a-3d),
**dadurch gekennzeichnet,**
**dass** die Dockstation (2) mit dem Schiff (3) durch Verbindungsmittel (12, 14a, 14b, 15) verbunden ist und, im Gebrauch, mindestens eine Sektion des Schiffsrumpfs überdeckt, einschließlich des Kiels oder Bodens (4) der Sektion.

2. Seefahrzeug (1) nach Anspruch 1, **dadurch gekennzeichnet, dass** zumindest das Schiff Hebemittel umfasst, so wie einen oder mehrere Schiffskräne oder Mobilkräne.

3. Seefahrzeug (1) nach Anspruch 1 oder 2, **dadurch gekennzeichnet, dass** die Dockstation (2) eine innere Form aufweist, die im Wesentlichen der Form der überdeckten Rumpfsektion entspricht.

4. Seefahrzeug (1) nach einem der Ansprüche 1 bis 3, **dadurch gekennzeichnet, dass** die Dockstation (2) und die Sektion des überdeckten Rumpfs einen dünnen wassergefüllten Zwischenraum mit einen niedrigen hydrodynamischen Widerstand in der Fahrtrichtung erzeugenden glatten Übergangsflächen bilden.

5. Seefahrzeug (1) nach einem der Ansprüche 1 bis 4, **dadurch gekennzeichnet, dass** die Verbindungsmittel (12) hydraulische Aktuatoren, Bolzen und/oder Hartholzkeile sind, die Verbindungen zwischen dem Schiff (3) und der Dockstation (2) oberhalb der Wasserlinie herstellen.

6. Seefahrzeug (1) nach einem der Ansprüche 1 bis 5, **dadurch gekennzeichnet, dass** eine Anzahl von Trennungsmitteln (14a, 14b, 15), so wie Hartholzplanken, das Schiff (3) am Kiel/Boden (4/6) und/oder an den Seiten (5a, 5b; 7a, 7b) von der Dockstation (2) trennen.

7. Seefahrzeug (1) nach einem der Ansprüche 1 bis 6, **dadurch gekennzeichnet, dass** die Dockstation (2) eine Anzahl von angeschlossenen Stabilisierungswassertanks in den Seiten und im Boden umfasst.

8. Seefahrzeug (1) nach einem der Ansprüche 1 bis 7, **dadurch gekennzeichnet, dass** das Schiff (3) ein Standardfrachtschiff, so wie ein Mehrzweckschiff mit einem oder mehreren Schiffskränen, z. B. ein Schwerlastschiff, oder ein Roll-On/Roll-Off-Schiff mit einem oder mehreren Mobilkränen auf den offenen Deckbereichen ist.

9. Verfahren zum Bereitstellen einer temporären Offshore-Arbeitsplattform an einer gewünschten Position, wobei das Verfahren die folgenden Schritte umfasst:
Positionieren eines Seefahrzeugs (1) für Transport und Offshore-Handhabung von Mitteln an der Position, wobei das Seefahrzeug ein Schiff und mindestens eine Dockstation mit einem oder mehreren zum Anheben dienenden Beinen und
Verbindungsmittel, die das Schiff und die Dockstation verbinden, umfasst,
Einsenken des einen oder der mehreren zum Anheben dienenden Beine (3a-3d) in den Meeresboden (10) und Anheben des Seefahrzeugs, und
Bereitstellen mindestens einer Verbindung zwischen einer Sektion des Kiels oder Bodens (4) des Schiffs (3) und der Dockstation (2) durch das Anheben des Seefahrzeugs.

10. Verfahren nach Anspruch 9, wobei Wasser eingeführt wird in und/oder entleert wird aus Stabilisierungswassertanks zum Kontrollieren des Niveaus der Dockstation und/oder insbesondere der Kraft auf den zum Anheben dienenden Beinen, wenn sie in den Seeboden verankert werden.

11. Verwendung eines Seefahrzeugs (1) nach einem der Ansprüche 1 bis 8 als eine temporäre Dockstation, wenn das eine oder die mehreren zum Anheben dienenden Beine (3a-3d) der Dockstation (2) in den Seeboden verankert sind.

12. Verwendung nach Anspruch 9 oder 10, wobei das Schiff (3) von der Dockstation (2) getrennt und wegbewegt wird bevor oder nachdem die zum Anheben dienenden Beine (3a-3d) in den Seeboden verankert werden.

13. Verwendung eines Seefahrzeugs (1) nach einem der Ansprüche 1 bis 8 als eine temporäre Arbeitsplattform zum Aufstellen und/oder zur Wartung von Offshore-Installationen, so wie Bohrinseln und Windturbinen, wenn das eine oder die mehreren zum Anheben dienenden Beine (3a-3d) der Dockstation (2) in den Seeboden (9) verankert sind.

14. Verwendung eines Verfahrens nach Anspruch 9 oder 10 zum Bereitstellen einer temporären Arbeitsplattform zum Aufstellen und/oder zur Wartung von Offshore-Installationen, so wie Bohrinseln und Windturbinen, wenn das eine oder die mehreren zum Anheben dienenden Beine der Dockstation in den Seeboden verankert sind.

## Revendications

1. Navire (1) destiné au transport et à la manipulation de moyens en mer, ledit navire comprenant :
un bateau (3) doté de moyens de propulsion (11), et
au moins une station d'amarrage (2) comprenant une ou plusieurs jambes d'élévation, comme par exemple quatre jambes (3a-3d),
**caractérisé en ce que**
ladite station d'amarrage (2) est relié au bateau (3) grâce à des moyens de raccordement (12, 14a, 14b, 15) et, en service, couvre au moins une partie de la coque du bateau comprenant la quille ou le fond (4) de ladite partie.

2. Navire (1) selon la revendication 1, **caractérisé en ce qu'**au moins ledit navire comprend des moyens de levage tels qu'une ou plusieurs grues de bateau ou grues mobiles.

3. Navire (1) selon la revendication 1 ou 2, **caractérisé en ce que** ladite station d'amarrage (2) comprend une forme intérieure qui correspond sensiblement à la forme de ladite partie de coque couverte.

4. Navire (1) selon l'une quelconque des revendications 1 à 3, **caractérisé en ce que** ladite station d'amarrage (2) et ladite partie de coque couverte établissent un mince espace rempli d'eau avec des zones de passage calmes créant une faible résistance hydrodynamique dans la direction de la navigation.

5. Navire (1) selon l'une quelconque des revendications 1 à 4, **caractérisé en ce que** lesdits moyens de raccordement (12) sont des actionneurs hydrauliques, des crocs d'accrochage en bois dur et / ou des chevilles qui établissent des raccordements entre le bateau (3) et la station d'amarrage (2) au-dessus de la ligne de flottaison.

6. Navire (1) selon l'une quelconque des revendications 1 à 5, **caractérisé en ce qu'**un certain nombre de moyens de séparation (14a, 14b, 15) tels que des planches en bois dur séparent ledit bateau (3) de la station d'amarrage (2) au niveau de la quille / du fond (4/6) et / ou des côtés (5a, 5b ; 7a, 7b).

7. Navire (1) selon l'une quelconque des revendications 1 à 6, **caractérisé en ce que** ladite station d'amarrage (2) comprend un certain nombre de réservoirs d'eau de stabilisation reliés aux côtés et au fond.

8. Navire (1) selon l'une quelconque des revendications 1 à 7, **caractérisé en ce que** ledit bateau (3) est un bateau marchand standard tel qu'un bateau polyvalent comprenant une ou plusieurs grues de bateau, par exemple, un transporteur de charges lourdes ou un bateau roulier comprenant une ou plusieurs grues mobiles sur les zones à pont ouvert.

9. Procédé permettant d'établir une plate-forme de travail en mer provisoire en une position désirée, ledit procédé comprenant les étapes consistant à :
positionner un navire (1) destiné au transport et à la manipulation de moyens en mer au niveau de la position, ledit navire comprenant un bateau et au moins une station d'amarrage avec une ou plusieurs jambes d'élévation et des moyens de raccordement qui relient le navire et la station d'amarrage,
faire pénétrer lesdites une ou plusieurs jambes d'élévation (3a - 3d) dans le fond de la mer (10) et élever le navire, et
établir au moins un raccordement entre une partie de la quille ou du fond (4) du bateau (3) et ladite station d'amarrage (2) par ladite élévation du navire.

10. Procédé selon la revendication 9, dans lequel l'eau est introduite dans les, et / ou évacuée des, réservoirs d'eau de stabilisation en commandant le niveau de la station d'amarrage et/ou en particulier la force exercée sur les jambes d'élévation quand elles sont ancrées dans le fond de la mer.

11. Utilisation d'un navire (1) selon l'une quelconque des revendications 1 à 8, en tant que station d'amarrage provisoire quand ladite ou lesdites plusieurs jambes d'élévation (3a- 3d) de la station d'amarrage (2) sont ancrées dans le fond de la mer.

12. Utilisation selon la revendication 9 ou 10, où le bateau (3) est désaccouplé et retiré de la station d'amarrage (2) avant ou après l'ancrage des jambes d'élévation (3a - 3d) dans le fond de la mer.

13. Utilisation d'un navire (1) selon l'une quelconque des revendications 1 à 8, en tant que plate-forme de travail provisoire pour installer ou faire fonctionner des installations en mer telles que des installations de forage et des éoliennes, lorsque ladite ou lesdites plusieurs jambes d'élévation (3a - 3d) de la station d'amarrage (2) sont ancrées dans le fond de la mer (9).

14. Utilisation d'un procédé selon la revendication 9 ou 10, pour établir une plate-forme de travail provisoire afin d'installer ou de faire fonctionner des installations en mer telles que des installations de forage et des éoliennes, lorsque ladite ou lesdites plusieurs jambes d'élévation de la station d'amarrage sont ancrées dans le fond de la mer.
